# EUROPÄISCHE PATENTSCHRIFT

(11) **EP 2 458 164 B1**
(45) Veröffentlichungstag und Bekanntmachung des Hinweises auf die Patenterteilung: **15.07.2015**
(21) Anmeldenummer: 11190665.7
(22) Anmeldetag: 25.11.2011
(51) Int. Cl.: F01D 25/20, F16N 13/02, F16N 13/16, F16N 7/38

(54) **Pumpe zum Fördern eines Mediums und Schmiermittelsystem**
Pump for conveying a medium and lubricant system
Pompe destinée au transport d'un milieu et système de lubrification

(30) Priorität: 25.11.2010 DE 102010061916
(43) Veröffentlichungstag der Anmeldung: 30.05.2012
(73) Patentinhaber: Aktiebolaget SKF, 41 550 Göteborg (SE)
(72) Erfinder: Kreutzkämper, Jürgen, 10405 Berlin (DE); Sattelberger, Paul, 68799 Reilingen (DE); Schürmann, Stefan, 69190 Walldorf (DE)
(74) Vertreter: Schonecke, Mitja

(56) Entgegenhaltungen:
- EP-A1- 0 715 118
- EP-A1- 1 130 221
- EP-A2- 1 389 671
- FR-A1- 2 561 352
- US-A- 2 991 845

## Beschreibung

Ausführungsbeispiele der vorliegenden Erfindung beziehen sich auf eine Pumpe zum Fördern eines Mediums, ein Schmiermittelsystem und ein Verfahren zum Fördern eines Mediums, beispielsweise eines im Wesentlichen inkompressiblen Mediums, etwa eine Flüssigkeit, ein Schmiermittel, ein Fett, ein Öl oder eine Emulsion.

Bei vielen Maschinen stellt das Fördern eines Mediums eine Haupt- oder eine Nebenaufgabe dar, die beispielsweise zur Aufrechterhaltung der Funktion der betreffenden Maschine notwendig ist. So muss beispielsweise häufig ein Kühlmittel oder ein Schmiermittel zu einer oder mehreren Stellen innerhalb der Maschine transportiert werden. Im Falle von Schmiermitteln sind entsprechende Orte häufig Lager, also etwa Wälzlager oder Gleitlager, oder andere Bereiche, bei denen sich einzelne Maschinenelemente relativ zueinander bewegen und bei denen eine Verringerung der Reibung und/oder eine Kühlung erreicht werden soll.

Hierbei besteht häufig die Notwendigkeit, die einzelnen Komponenten eines solchen Systems zum Transport des Mediums präzise aufeinander abzustimmen, um möglichst unter allen Betriebsbedingungen eine ausreichende Versorgung mit dem betreffenden Medium sicherzustellen. So kann es beispielsweise ratsam sein, Systeme zur Versorgung und zur Entsorgung entsprechender Medien aufwendig aufeinander abzustimmen, um eine Unter- oder Überversorgung mit dem entsprechenden Medium zu verhindern.

Im Falle von sich zueinanderbewegenden mechanischen Bauteilen, bei denen eine Schmierung zur Reduzierung des Verschleißes vorgesehen ist, kann so beispielsweise eine Abstimmung einer Schmiermittelversorgung und einer zugehörigen Schmiermittelentsorgung ratsam sein.

Die DE 44 42 188 C1 und die DE 20 2007 005 273 U1 beschreiben so beispielsweise Schmiermittelabsaugpumpen, mit denen Schmierstoffe gezielt abgesaugt werden. Hierdurch besteht jedoch die Gefahr einer Minderschmierung, die wiederum zu erhöhtem Verschleiß und damit zu einer erhöhten Abnutzung und einer reduzierten Lebensdauer der betreffenden Maschine führen kann.

Häufig erfordern der Bau und die Wartung eines solchen Systems eine Konstruktion und Fertigung mit entsprechend geringen Toleranzen sowie eine aufwendige Abstimmung während des Zusammenbaus und eine aufwendige Wartung während des späteren Betriebs.

Ausgehend hiervon besteht daher die Aufgabe der vorliegenden Erfindung darin, eine Abstimmung einer solchen Maschine zu vereinfachen.

Diese Aufgabe wird durch eine Pumpe gemäß Anspruch 1 oder ein Verfahren gemäß Anspruch 10 gelöst.

Gemäß einem Ausführungsbeispiel der vorliegenden Erfindung umfasst eine Pumpe zum Fördern eines Mediums eine Pumpenkammer mit einer Einlassöffnung und einer Auslassöffnung sowie ein bewegliches Bauteil, das wenigstens teilweise in der Pumpenkammer beweglich angeordnet und ausgebildet ist, um eine Menge des Mediums, das sich in der Pumpenkammer befindet, von der Einlassöffnung zu der Auslassöffnung zu fördern. Es umfasst ferner eine Belüftungseinrichtung mit einer von der Einlassöffnung und der Auslassöffnung verschiedenen Belüftungsöffnung in der Pumpenkammer, wobei die Belüftungseinrichtung ausgebildet ist, um wenigstens zeitweise ein Bilden eines Unterdrucks in der Pumpenkammer zu reduzieren oder im Wesentlichen zu unterbinden.

Ein Ausführungsbeispiel eines Verfahrens zum Fördern eines Mediums umfasst so ein Aufnehmen einer Menge des Mediums durch eine Einlassöffnung einer Pumpenkammer, ein Fördern der Menge des Mediums zu einer Auslassöffnung, und wenigstens zeitweise ein Belüfteten der Pumpenkammer, um ein Bilden eines Unterdrucks in der Pumpenkammer zu reduzieren oder im Wesentlichen zu unterbinden.

Handelt es sich beispielsweise bei dem zu fördernden Medium um ein Schmiermittel, kann so ferner eine Aufgabe der vorliegenden Erfindung ebenso darin bestehen, eine Schmiermittelversorgung zu verbessern.

Diese Aufgabe wird durch ein Schmiermittelsystem gemäß Anspruch 7 gelöst.

Ein Ausführungsbeispiel eines Schmiermittelsystems zum Abführen einer Menge eines Schmiermittels von einem Maschinenelement umfasst so eine zuvor beschriebene Pumpe, bei der eine Schmiermittelabführung (z. B. ein entsprechender Anschluss) des Maschinenelements mit der Einlassöffnung der Pumpe gekoppelt ist, um ein aus dem Maschinenelement austretendes Schmiermittel als Medium zu fördern. Das Schmiermittelsystem umfasst ferner einen Anschluss für einen Sammelbehälter, der mit der Ausgangsöffnung der Pumpe gekoppelt ist, um das von der Pumpe geförderte Schmiermittel an einen anschließbaren Sammelbehälter abzugeben, wobei das Schmiermittelsystem ausgebildet ist, um das aus dem Maschinenteil austretende Schmiermittel ohne einen Unterdruck in der Pumpenkammer der Pumpe, beispielsweise durch eine Fliehkraft, eine Trägheitskraft, eine Diffusionskraft oder eine Schwerkraft, über die Einlassöffnung in die Pumpenkammer der Pumpe aufzunehmen.

Ausführungsbeispielen der vorliegenden Erfindung liegt so die Erkenntnis zugrunde, dass eine aufwendige Abstimmung von Systemen vereinfacht und/oder gegebenenfalls eine Schmiermittelversorgung verbessert werden kann, indem eine Pumpe zum Einsatz kommt, bei der eine Aufnahme einer Menge des zu fördernden Mediums in die Pumpenkammer nicht durch das Schaffen eines Unterdrucks in dieser erzielt wird. Anders ausgedrückt wird bei Ausführungsbeispielen der vorliegenden Erfindung das zu fördernde Medium, also beispielsweise das zu fördernde Schmiermittel, nicht durch die Pumpe abgesaugt, sondern gelangt vielmehr durch einen "druckfreien" Transport in die Pumpenkammer der Pumpe und kann so zu der Ausgangsöffnung der Pumpe gefördert werden. Dies wird durch die Belüftungseinrichtung ermöglicht, die ausgebildet ist, um wenigstens zeitweise gerade das Bilden eines solchen Unterdrucks in der Pumpenkammer zu reduzieren oder sogar im Wesentlichen zu unterbinden.

Hierdurch kann gegebenenfalls eine aufwendige Abstimmung der einem Maschinenteil zugeführten Menge eines Schmiermittels genau auf eine abgesaugte Menge entfallen. Vielmehr kann es durch den Einsatz von Ausführungsbeispielen der vorliegenden Erfindung häufig möglich sein, eine entsprechende Anpassung völlig zu umgehen, da die Pumpe gerade nicht aktiv absaugt, sodass die Gefahr einer Unterversorgung mit dem Medium, also beispielsweise dem Schmiermittel, durch eine zu große Absaugmenge reduziert wird. Hierdurch können unerwünschte Komplikationen, wie eine Minderschmierung und damit ein erhöhter Verschleiß, verhindert werden.

Nachfolgend werden Ausführungsbeispiele der vorliegenden Erfindung anhand der beigefügten Figuren näher erläutert.
Fig. 1 zeigt eine Querschnittsdarstellung einer Pumpe gemäß einem Ausführungsbeispiel der vorliegenden Erfindung;
Fig. 2 zeigt eine schematische Darstellung eines Schmiermittelsystems gemäß einem Ausführungsbeispiele der vorliegenden Erfindung; und
Fig. 3 zeigt eine Querschnittsdarstellung einer Pumpe gemäß einem weiteren Ausführungsbeispiel der vorliegenden Erfindung mit einem Belüftungsventil.

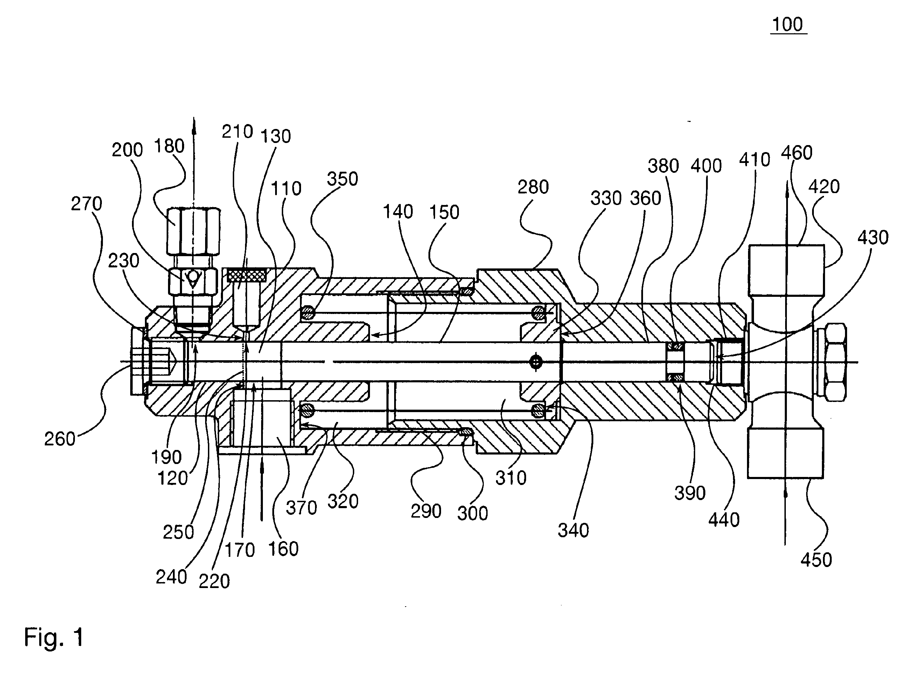

Bevor im Folgenden anhand der Fig. 1 bis 3 Ausführungsbeispiele der vorliegenden Erfindung näher erläutert werden, bietet es sich an, darauf hinzuweisen, dass Ausführungsbeispiele der vorliegenden Erfindung grundsätzlich nicht auf Schmiermittelsystem beschränkt sind, auch wenn die nachfolgende Beschreibung sich auf Ausführungsbeispiele im Zusammenhang mit solchen und entsprechenden Pumpen konzentriert. Entsprechend wird im Rahmen der vorliegenden Beschreibung als Medium häufig ein Schmiermittel, also etwa ein Öl oder ein Fett beispielhaft erwähnt. Grundsätzlich sind jedoch Ausführungsbeispiele der vorliegenden Erfindung nicht auf solche Medien beschränkt. So ist beispielsweise eine Pumpe gemäß einem Ausführungsbeispiel der vorliegenden Erfindung auch zum Fördern eines anderen Mediums geeignet.

Als Medium können beispielsweise solche verwendet werden, die im Wesentlichen inkompressibel sind, wie etwa eine Flüssigkeit oder ein anderer viskoser Stoff. Hierzu zählen nicht zuletzt die bereits erwähnten Fette ebenso wie andere Emulsionen. Als Medium können jedoch ebenso Feststoffe, also beispielsweise fein körniges Schüttgut, etwas auf Kohlenstoff-Basis, verwendet werden. Aber auch andere Medien können durch Pumpen gemäß Ausführungsbeispielen der vorliegenden Erfindung gefördert werden.

Fig. 1 zeigt einen Querschnitt durch eine Pumpe 100 gemäß einem ersten Ausführungsbeispiel der vorliegenden Erfindung. Die Pumpe 100 weist einen Pumpenkörper 110 auf, in den sich eine zylindrische Bohrung 120 hinein erstreckt. Ein Teil der Bohrung 120 bildet so zumindest einen Teil einer Pumpenkammer 130.

Ausgehend von einer Öffnung 140 des Pumpenkörpers 110 erstreckt sich in die Bohrung 120 ein Kolben 150 (Pumpenkolben) in den Pumpenkörper 110 hinein. Die Bohrung 120 und der Kolben 150 sind hierbei der Art aufeinander ausgelegt, dass der Kolben 150 unter Berücksichtigung der Viskosität des zu fördernden Mediums, also des Schmiermittels, eine ausreichende Dichtung der Pumpenkammer 130 bezüglich der Öffnung 140 ermöglicht. Je nach dem zu fördernden Medium können hier unterschiedliche Toleranzen von Bohrung 120 und Kolben 150 zueinander zum Einsatz kommen, die gegebenenfalls durch Dichtelemente unterstützt werden können.

Der Pumpenkörper 110 weist ferner einen Pumpeneinlass 160 mit einer Einlassöffnung 170 in der Pumpenkammer 130 auf, über den das zu fördernde Medium in diesen druckfrei gelangen kann. Darüber hinaus weist der Pumpenkörper 110 einen Auslass 180 auf, der eine Auslassöffnung 190 in der Pumpenkammer 130 umfasst. Der Auslass 180 umfasst ferner ein Rückschlagventil 200, um ein Rückströmen des geförderten Mediums aus dem Auslass 180 (Pumpenauslass) in die Pumpenkammer 130 zu verhindern oder zumindest zu reduzieren. Das Rückschlagventil 200 in dem Auslass 180 ist folglich ausgebildet, um ein Rückströmen des Mediums wenigstens zeitweise in die Pumpenkammer durch die Auslassöffnung 190 im Wesentlichen zu unterbinden.

Der Pumpenkörper 110 umfasst ferner eine Belüftungseinrichtung 210 mit einer von der Einlassöffnung 170 und der Auslassöffnung 190 verschiedenen Belüftungsöffnung 210 (Belüftungsbohrung) in der Pumpenkammer 130. Bei der Fig. 1 gezeigten Ausführungsform einer Pumpe 100 fluchtet hierbei eine der Auslassöffnung 190 zugewandte Kante 230 der Belüftungsöffnung 220 (Belüftungsbohrung) mit einer der Auslassöffnung 190 zugewandten Kante 240 der Einlassöffnung 170, wie dies eine gepunktete Linie 250 in Fig. 1 zeigt, sodass bei einer Bewegung des Kolbens 150 sowohl die Einlassöffnung 170 als auch die Belüftungsöffnung 220 im Wesentlichen zeitgleich durch den Kolben 150 geöffnet bzw. verschlossen werden. Die in Fig. 1 dargestellte Pumpe 100 weist darüber hinaus an dem Pumpenkörper 110 einen Verschluss 260 auf, der über eine Dichtung 270 an einer der Öffnung 140 abgewandten Öffnung der Bohrung 120 angebracht ist, auf. Der Verschluss dichtet hierbei einerseits die Pumpenkammer 130 ab und dient darüber hinaus als Anschlag für den Kolben 150.

Neben dem Pumpenkörper 110 weist die Pumpe 100 ferner einen zweiten Pumpenkörper 280 auf, der mit dem Pumpenkörper 110 über ein Gewinde 290 und eine Dichtung 300 mechanisch verbindbar ausgeführt ist. Der zweite Pumpenkörper 280 weist hierbei eine Bohrung 310 auf, die mit einer Ausnehmung 320 des Pumpenkörpers 110 bei mechanischer Verbindung der beiden Pumpenkörper 110, 280 einen konzentrischen Hohlraum bildet, in den sich der Kolben 150 hinein erstreckt. An einer dem Pumpenkörper 110 abgewandten Seite des Kolbens 150 ist an diesem ein Ring 330 mechanisch befestigt, der eine Schulter 340 aufweist, gegen die eine Druckfeder 350 im zusammengesetzten Zustand der beiden Pumpenkörper 110, 280 eine Kraft auf den Ring 330 ausübt und diesen so gegen eine Stirnfläche 360 der Bohrung 310 des zweiten Pumpenkörpers 280 drückt. Die Druckfeder 350 stützt sich hierbei an einer Stirnfläche 370 der Ausnehmung 320 des Pumpenkörpers 110 ab.

Der Kolben 150 erstreckt sich bei der in Fig. 1 gezeigten Pumpe 100 durch die Bohrung 310 des zweiten Pumpenkörpers 280 in eine konzentrisch zu der Bohrung 120 angelegten weiteren Bohrung 380 hinein, wobei der Kolben 150 in einem Abschnitt eine Verjüngung 390 aufweist, in dem sich der Kolben 150 in der weiteren Bohrung 380 erstreckt. In der abschnittsweisen Verjüngung 390 ist eine Dichtung 400 aufgebracht, die bei der in Fig. 1 gezeigten Pumpe 100 durch zwei O-Ringe gebildet wird und den Kolben 150 gegen die weitere Bohrung 380 abgedichtet.

Über ein Innengewinde 410 in der weiteren Bohrung 380 des zweiten Pumpenkörpers 280 ist ein T-förmiges Anschlussstück 420 für eine Fig. 1 nicht gezeigte Steuerleitung mit dem zweiten Pumpenkörper 280 verschraubt. Hierbei bildet sich angrenzend an eine Stirnfläche 430 des Kolbens 150, die innerhalb der weiteren Bohrung 380 des zweiten Pumpenkörpers 280 liegt, ein Hohlraum 440 aus, welcher mit der in Fig. 1 nicht gezeigten Steuerleitung in direktem Kontakt steht. Wird so ein Gas, ein Gasgemisch, eine Flüssigkeit oder eines anderes Mediums über einen ersten Steueranschluss 450 oder einen zweiten Steueranschluss 460 des Anschlussstücks 420 eingeleitet, so kann das betreffende Medium auch in den Hohlraum 440 strömen und - bei einem entsprechenden Druck - eine Kraft auf die Stirnfläche 430 des Kolbens 150 ausüben, sodass sich der Kolben 150 in den Bohrungen 380, 120 gegen die Kraft der Druckfeder 350 aus einer in Fig. 1 gezeigten Grundstellung heraus nach links bewegen kann.

Die Pumpe 100, wie sie in Fig. 1 gezeigt ist, stellt eine hydraulische Altfettpumpe dar, bei der der Pumpeneinlass 160 der Art mit einer Quelle für Altfett, also beispielsweise einem Fettauslass eines Lagers, gekoppelt ist, dass das Altfett von dem betreffenden Lager unmittelbar oder mittelbar über Rohre, Kanäle oder Bohrungen oder andere hydraulische oder pneumatische Komponenten oder Systeme über die Einlassöffnung 100 in die Pumpenkammer 130 gelangen kann. Eine Kopplung eines Einlasses oder eines Auslasses ist in diesem Zusammenhang also als eine hydraulische Kopplung oder Verbindung zu verstehen.

Entsprechend kann beispielsweise auch der Auslass 180 der Pumpe 100 mit einem Altfettsammelbehälter gekoppelt werden, sodass Fett, das in die Pumpenkammer 130 gelangt ist, von der Pumpe 100 über den Auslass 180 zu diesem gefördert wird.

Der Pumpenkolben 150 steht zu Beginn eines Pumpzyklus in seiner Grundstellung, wie dies in Fig. 1 auch gezeigt ist. Der Kolben 150 wird dabei durch die Druckfeder 350 an den in Fig. 1 durch die Stirnfläche 360 gebildeten, rechten Anschlag gedrückt, sodass die Pumpenkammer 130 über die Einlassöffnung 170 geöffnet ist.

Das Altfett kann nun in einem "druckfreien Zustand" von seiner Quelle, also beispielsweise einem Maschinenteil (z. B. einem Lager) nur aufgrund von Kräften in die Pumpenkammer 130 eindringen, denen es ohnehin während des Betriebs ausgesetzt ist. Hierbei kann es sich beispielsweise um das Einwirken einer Fliehkraft aufgrund einer Rotation, einer Diffusionskraft, einer hydrodynamischen oder einer hydrostatischen Kraft, einer anderen Trägheitskraft oder einfach der Schwerkraft handeln, die es in Richtung des Einlasses 160 der Pumpe 100 transportiert. Die Pumpe 100 ist dabei aufgrund ihrer Belüftungseinrichtung 210 gerade in der Lage, diesen druckfreien Transport des Mediums in die Pumpenkammer 130 zu ermöglichen, sodass das zu fördernde Medium gerade nicht von der entsprechenden Quelle in die Pumpenkammer 130 hinein abgesaugt wird. Dadurch, dass lediglich ohnehin auftretende Kräfte genutzt werden, kann so die Gefahr einer Minderschmierung reduziert werden, ohne dass eine aufwendige Abstimmung der entsprechenden Fördermengen beim Abpumpen und bei der Zuführung notwendig ist. Ebenso kann gegebenenfalls eine Konstruktion eines entsprechenden Schmiermittelsystems vereinfacht werden, da gegebenenfalls weitere Einheiten, etwa Rückschlagventile oder andere Strömungskontrollen, eingespart werden können.

Die Belüftungseinrichtung 210 steht hierbei entweder mittelbar oder unmittelbar mit einem Reservoir für ein Gas oder ein Gasgemisch in Verbindung, sodass ein Druckausgleich zwischen der Pumpenkammer 130 und einem Referenzdruck des Gases oder des Gasgemischs möglich ist. Bei dem Gas oder Gasgemisch kann es sich beispielsweise um die Umgebungsluft der Maschine, in die die Pumpe 100 integriert ist, handeln. Anders ausgedrückt kann die Pumpenkammer 130 über die Belüftungseinrichtung 210 mit der Umgebung derart in Verbindung stehen, dass ein Druckausgleich über die die Maschine umgebende Luft möglich ist.

Es können aber auch andere Gas- oder Gasgemischquellen, also beispielsweise Druckgasflaschen, mit der Belüftungseinrichtung pneumatische gekoppelt werden, um den entsprechenden Druckausgleich zu ermöglichen. Hierdurch kann wenigstens zeitweise während des Betriebs der Pumpe 100 das Bilden eines Unterdrucks in der Pumpenkammer 130 reduziert, gegebenenfalls sogar im Wesentlichen unterbunden werden.

Ausgehend von der Fig. 1 gezeigten Grundstellung kann nun durch Beaufschlagen der Stirnfläche 430 des Kolbens 150 dieser in Fig. 1 nach links bewegt werden, sodass zunächst der Kolben 150 sich vor die Einlassöffnung 170 und dann vor die Belüftungsöffnung 220 schiebt. Durch die beschriebene Ausrichtung der Kanten 230, 240 der beiden Öffnungen 170, 220 werden diese durch den Kolben 150 im Wesentlichen zeitgleich verschlossen, worauf hin das sich in der Pumpenkammer 130 angesammelte Medium durch die Auslassöffnung 190 und den Auslass 180 aus der Pumpe 100 heraus gefördert wird.

Anders ausgedrückt kann der Kolben 150 als bewegliches Bauteil der Pumpe 100 ausgehend von der in Fig. 1 gezeigten Grundstellung während einer ersten Bewegungsphase das sich in der Pumpenkammer 130 angesammelte Medium durch die Auslassöffnung 190 aus der Pumpe 100 heraus fördern.

Hieran schließt sich eine zweite Bewegungsphase an, die bei der in Fig. 1 gezeigten Pumpe 100 beispielsweise dadurch eingeleitet werden kann, dass der Druck auf die Stirnfläche 430 des Kolbens 150 abnimmt, sodass die Druckfeder 350 den Kolben wiederum in Richtung der Grundstellung bewegt. Hierbei wird ein Rückströmen des Mediums in die Pumpenkammer 130 durch das Rückschlagventil 200 unterbunden. Erreicht der Kolben 150 eine Stellung, in der im Wesentlichen zeitgleich die Einlassöffnung 170 und die Belüftungsöffnung 220 der Belüftungseinrichtung 210 geöffnet werden, findet ein Druckausgleich im Inneren der Pumpenkammer 130 durch das über die Belüftungseinrichtung 210 einströmende Gas oder Gasgemisch statt. Als Folge kann so das über die Einlassöffnung 170 wiederum zu fördernde Medium im Wesentlichen druckfrei in die Pumpenkammer 130 gelangen.

Das Pumpenprinzip der Fig. 1 gezeigten Pumpe entspricht daher einer hydraulisch angetriebenen Einkolbenpumpe, die die Aufgabe hat, Altfett aus Lagern oder anderen Maschinenteilen über den Pumpeneinlass 160 in die Pumpenkammer 130 aufzunehmen und über den Auslass 180 in einen in Fig. 1 nicht gezeigten Sammelbehälter zu fördern.

Bei einem Druckanstieg in der Hauptleitung, vermittelt durch das Anschlussstück 420, fährt der Pumpenkolben 150 über die Einlassbohrung 170 und die Entlüftungsbohrung 220 in Fig. 1 nach links und schiebt das angesammelte Altfett zum Auslass 180. Bei Entlastung der Hauptleitung schiebt die Druckfeder 350 dann den Pumpenkolben 150 wiederum zum rechten Anschlag, gebildet durch die Stirnfläche 360 des zweiten Pumpenkörpers 280, in die Grundstellung zurück. Bei dem Überfahren des Pumpeneinsatzes 170 und der Entlüftungsbohrung 220 entsteht hierbei gerade kein Unterdruck oder Vakuum mehr, sodass ein Ansaugen des zu fördernden Materials im Wesentlichen unterbunden oder verhindert wird. Das Altfett kann sich nun bis zur nächsten Förderung in der Pumpenkammer sammeln.

Hierdurch ergibt sich der Vorteil, dass das Altfett selbst nicht mehr aus den Lagern oder anderen Maschinenteilen gesaugt wird, da der bei konventionellen Pumpen auftretende Unterdruck im Wesentlichen unterbunden, zumindest jedoch reduziert wird. Lediglich das überschüssige Altfett der Lager gelangt durch eine der zuvor genannten Kräfte aus den Lagern hin zu der Pumpe 100. Die individuelle Anpassung eines Verhältnisses der Mengen von zugeführtem Schmiermittel und abgeführtem Altfett kann damit typischerweise entfallen. Somit verringert sich das Risiko des zu viel abgesaugten Fettes und der damit möglicherweise verbundenen Mangelschmierung erheblich.

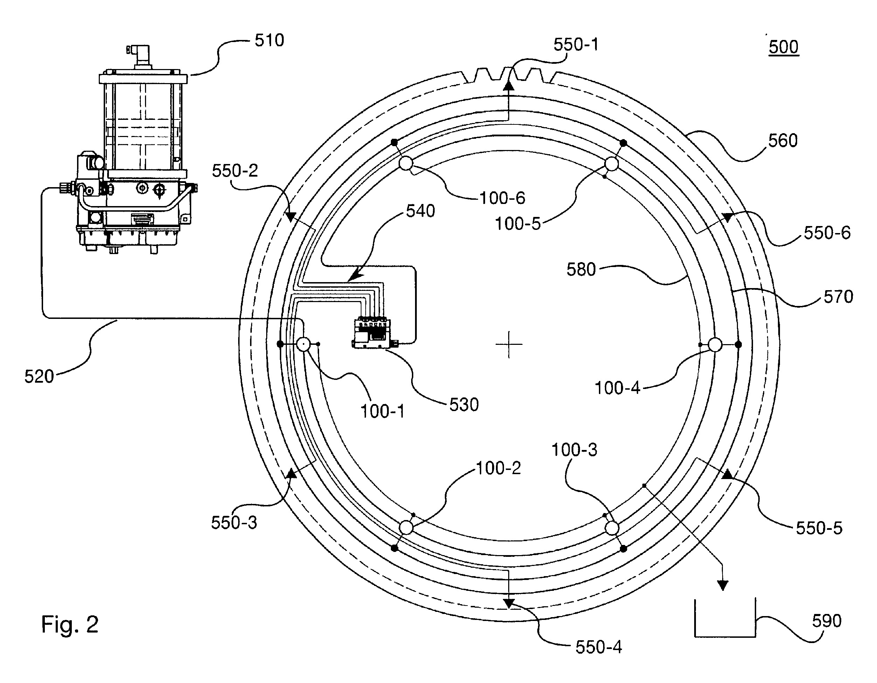

Fig. 2 zeigt eine schematische Darstellung eines Schmiermittelsystems 500 gemäß einem Ausführungsbeispiel der vorliegenden Erfindung. Das Schmiermittelsystem 500 weist hierbei eine Einleitungspumpe 510 auf, die mit einem in Fig. 2 nicht gezeigten Schmiermittelreservoir eingangsseitig gekoppelt ist und über eine Hauptleitung 520 ausgangsseitig mit einer oder einer Mehrzahl von Pumpen 100 gekoppelt ist. Bei dem in Fig. 2 gezeigten Ausführungsbeispiel eines Schmiermittelsystems 500 sind 6 hydraulische Altfett-Pumpen 100-1, ..., 100-6 jeweils über die beiden Steueranschlüsse 450, 460 (siehe Fig. 1) in Serie geschaltet. Der zweite Steueranschluss 460 der letzten Pumpe 100-6 ist mit einem Verteiler 530, beispielsweise einem Kolbenverteiler eingangsseitig gekoppelt, sodass das über die Hauptleitung 520 geförderte Schmiermittel nicht nur zur Ansteuerung der Pumpen 100 über ihre Steueranschlüsse 450, 460 dient, sondern ebenso über den Verteiler 530 und entsprechende Verteilerleitungen 540 an eine entsprechende Anzahl von Maschinenelementen 550 verteilt wird.

Fig. 2 zeigt hierbei die entsprechenden Maschinenelemente 550 lediglich vereinfacht als Dreiecksymbole 550-1, ..., 550-6. Genauer gesagt zeigt Fig. 2 einen Zahnkranz 560 eines Pitchlagers einer Windkraftanlage. Die Pumpen 100 sind über eine Zwischenleitung 570 an den Fettaustrittsstellen im Zahnkranz 560 direkt mit ihren jeweiligen Pumpeneinlässen 160 angebaut. Je nach konkreter Implementierung eines entsprechenden Schmiermittelsystems 500 kann dies beispielsweise durch Vorsehen von Bohrungen und einen Einbau der Pumpen direkt in die entsprechenden Komponenten (z. B. direkt in den Zahnkranz 560), aber auch über eine Befestigung (z. B. ein Montagering) erfolgen.

Durch die Drehbewegung des Zahnrads 560 wirkt so eine Fliehkraft auf das Fett, das das Altfett in Richtung der Pumpen 100 bewegt. Es sammelt sich in den Pumpenkammern 130 der betreffenden Pumpen 100 und kann dann in der zuvor beschriebenen Druckphase, wenn also über die Einleitungspumpe 510 Druck auf die Stirnfläche 430 der Kolben 150 der Pumpen 100 ausgeübt wird, aus den Pumpen in eine Altfettsammelleitung 580 gefördert werden. Die Altfettsammelleitung ist mit einem Sammelbehälter 590 über einen in Fig. 2 nicht gezeigten Anschluss gekoppelt.

In der Druckphase wird so der Pumpenkolben 150 hydraulisch von der Einleitungspumpe angetrieben und schiebt das Altfett, das sich in den Pumpenkammern 130 der Pumpen 100 angesammelt hat, in Richtung der jeweiligen Auslässe 180 der Pumpen 100. Der Pumpendruck der Pumpen 100 entsteht dabei erst dann, wenn der Kolben 150 die Entlüftungsbohrung 220 und die zugehörige Kante 230 der Einlassöffnung 170 überfahren hat.

Wird der Druck der Einleitungspumpe 510 wiederum reduziert, kehren die Pumpen in ihre jeweilige Grundstellung aufgrund der Druckfedern 350 zurück, sodass die Pumpen wiederum zur Altfettaufnahme bereit sind. Hierdurch ergibt sich die Möglichkeit, zyklisch oder periodisch das entsprechende Medium zu fördern.

Selbstverständlich können bei Ausführungsbeispielen der vorliegenden Erfindung so viele Pumpen 100 in Reihe, beispielsweise vor den Kolbenverteiler 530 vorgesehen werden, wie dies notwendig ist. Zwar zeigt Fig. 2 eine entsprechende Schmiermittelanlage mit sechs Punkten und einer entsprechenden Anzahl von Verteilerleitungen 540, jedoch können die Anzahl der implementierten Pumpen und die Anzahl der entsprechenden Verteilerleitungen unabhängig voneinander den entsprechenden Bedingungen angepasst werden.

Darüber hinaus kann selbstverständlich in die Hauptleitung 520 des in Fig. 2 gezeigten Schmiermittelsystems ebenfalls eine Druckentlastung integriert werden, mit der beispielsweise ein Übersteigen eines Drucks verhindert werden kann. Dies kann schon deshalb sinnvoll sein, da bei dem in Fig. 2 gezeigten Ausführungsbeispiel ebenso wie bei der in Fig. 1 gezeigten Pumpe der Pumpenantrieb über die Einleitungspumpe 510 erfolgt und daher die Kolben 150 der Pumpen 100 gegen die entsprechenden Federn 350 bewegt werden müssen. Eine Druckentlastung stellt daher eine optionale Komponente dar, die bei manchen Ausführungsbeispielen der vorliegenden Erfindung vorteilhaft sein kann, um den herrschenden Druck in der Hauptleitung 520 oder die geförderte Menge zu limitieren.

Ein Schmiermittelsystem, wie es beispielsweise in Fig. 2 gezeigt ist, sowie die entsprechenden hydraulischen Pumpen 100 können so Sammelbehälter ersetzen, die bisher im Bereich der Lager direkt angebracht wurden, um das austretende Altfett einzusammeln. Durch das beschriebene Zusammenfassen der Pumpenausgänge 180 der Pumpen 100 über die Altfettsammelleitung 580 kann so das gesamte Altfett in einen oder auch mehrere Sammelbehältern 590 gefördert werden. Das durch die Drehbewegung der Lager austretende Altfett gelangt somit in die entsprechenden Sammelflaschen. Die Entsorgung und der Einbau neuer Flaschen, der häufig sehr zeitaufwendig ist, kann daher vereinfacht oder reduziert, gegebenenfalls sogar vollständig eingespart werden. Hierdurch kann es möglich sein, erhebliche Kosteneinsparungen zu erzielen, da unter Umständen Wartungsintervalle verlängert werden können.

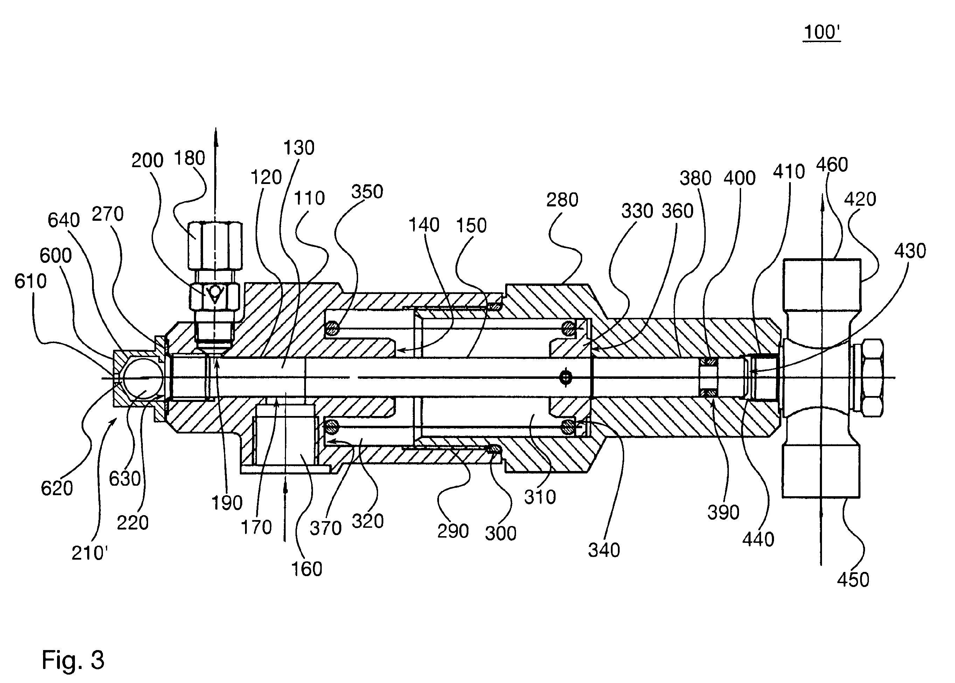

Fig. 3 zeigt einen Querschnitt durch eine andere Pumpe 100' gemäß einem weiteren Ausführungsbeispiel der vorliegenden Erfindung, die sich von der in Fig. 1 gezeigten Pumpe 100 nur hinsichtlich zweier Aspekte unterscheidet. So fehlt der Pumpe 100' der Verschluss 260 an dem Pumpenkörper 110. Ferner ist die Belüftungseinrichtung 210 unterschiedlich ausgeführt. So weist die in Fig. 3 gezeigte Pumpe 100' eine Belüftungseinrichtung 210' auf, die an der Stelle des Verschlusses 260 der Pumpe 100 aus Fig. 1 an die Dichtung 270 angebracht ist. Entsprechend liegt die entsprechende Belüftungsöffnung 220 der Öffnung 140 des Pumpenkörpers 110 gegenüber.

Die Belüftungseinrichtung 210' umfasst ferner ein Belüftungsventil 600, das eine äußere Belüftungsöffnung 610 aufweist, die in einen Hohlraum 620 mündet, in dem eine Kugel 630 als Dichtelement zwischen einer angeschrägten Stirnfläche 640 und einer nur um den Umfang teilweise ausgebildete Schulter 650 des Belüftungsventils 600 beweglich ist und einen entsprechenden Druckausgleich während einer Bewegung des Kolbens 150 in Richtung der Grundstellung ermöglicht.

Anders ausgedrückt ist das Belüftungsventil 600 als ein Rückschlagventil ausgeführt, bei dem im Falle eines Entstehens eines Unterdrucks im Inneren der Pumpenkammer 130 im Vergleich zu einem Referenzdruck (z. B. der Umgebung der Pumpe 100') ein über die äußere Belüftungsöffnung 610 wirkender Druck die Kugel 630 gegen die Schulter 650 drückt, was den Druckausgleich ermöglicht.

Während der Bewegungsphase, in der sich der Kolben 150 in Fig. 3 jedoch nach links bewegt und das in die Pumpenkammer 130 eingetretene Medium in Richtung der Auslassöffnung 190 bewegt, überschreitet ein Druck im Inneren der Pumpenkammer den über die äußere Belüftungsöffnung 610 auf die Kugel 630 einwirkenden Druck, sodass die Kugel 630 gegen die angeschrägte Stirnfläche 640 des Belüftungsventils 600 gedrückt wird, und die äußere Belüftungsöffnung 610 entsprechend abgedichtet wird. Je nach konkreter Ausgestaltung des Belüftungsventils 600 kann hierbei ein zusätzlicher dichtender Effekt durch das Altfett, welches in das Belüftungsventil über die Belüftungsöffnung 220 eindringt, durchaus eine zusätzliche Dichtwirkung entfalten.

Das Belüftungsventil 600 kann optional ein Federelement aufweisen, das zusätzlich eine Kraft auf die Kugel 630 oder ein anderes entsprechendes Dichtelement ausgeübt, sodass die dichtende Wirkung des Belüftungsventils 600 bei unterschiedlichen Druckdifferenzen zwischen dem Druck im Inneren der Pumpenkammer 130 und dem Referenzdruck überwunden wird. Ein solcher Referenzdruck kann wiederum durch den äußeren Luftdruck, also durch den in einer Umgebung der Pumpe 100' herrschenden Druck gegeben sein, oder aber auch durch Zuleitung eines entsprechenden Gases oder Gasgemisches definiert werden. Anders ausgedrückt kann das Belüftungsventil 600 dahin gehend ausgebildet sein, dass es öffnet, wenn eine vorbestimmte Druckdifferenz zwischen der Pumpenkammer und dem Referenzdruck vorliegt, sodass das Bilden eines Unterdrucks in der Pumpenkammer 130 bezogen auf den Referenzdruck reduziert wird.

Ausführungsbeispiele der vorliegenden Erfindung sind selbstverständlich nicht auf die im Rahmen der vorliegenden Anmeldung beschriebenen konkreten Ausführungsformen beschränkt. So können beispielsweise unterschiedliche Bauformen der Pumpe eingesetzt werden. Während die Pumpenkörper 110, 280 der in den Fig. 1 und 3 gezeigten Ausführungsbeispielen für eine separate Montage beispielsweise zusammen mit Halterungen oder Montageringen ausgelegt sind, können diese auch in Form von Hülsen oder entsprechender Adapter direkt in Bohrungen oder Kanäle von Maschinenteilen integriert werden. Auch ist eine Nachrüstung bereits bestehender Anlagen beispielsweise über entsprechende Halterungen oder Montageringe möglich, bei denen die betreffenden Pumpen an unterschiedlichen Stellen anbringbar sind.

Aber nicht nur die Pumpen 100, 100' als Ganzes können an unterschiedlichen Stellen implementiert werden, vielmehr können sich Pumpen gemäß Ausführungsbeispielen der vorliegenden Erfindung auch hinsichtlich anderer als den bisher geschilderten Details voneinander unterscheiden. So kann beispielsweise ein anderes Federelement als die Druckfeder 350 verwendet werden, um den Kolben 150 in eine Grundstellung zu bringen. So können beispielsweise mechanische Zugfedern oder pneumatische oder hydraulische Federelemente eingesetzt werden.

Auch können die Anschlüsse 160, 180 sowie die Belüftungseinrichtung 210, 210' in unterschiedlichen Ausführungsbeispielen der vorliegenden Erfindung unterschiedlich ausgelegt werden.

Ebenso ist es möglich, die Pumpen 100, 100' nicht über einen Hydraulikkreis, wie dies in den Figuren 1 bis 3 gezeigt ist, anzutreiben, sondern einen hiervon separaten Antrieb bzw. eine separate Energiequelle zu verwenden. So kann es gegebenenfalls ratsam sein, einen vorhandenen hydraulischen Antriebskreis zu verwenden. Auch eine pneumatische, elektrische oder andersgeartete Antriebstechnologie ist einsetzbar, also beispielsweise ein Elektromotor.

Auch kann es gegebenenfalls ratsam sein, den Kolben 150 bei den in den Fig. 1 und 3 gezeigten Pumpen 100, 100' anders auszuführen, sodass die Belüftungsöffnung 220 und die Einlassöffnung 190 anders als in der beschriebenen Art und Weise angeordnet sind. Auch kann die Belüftungseinrichtung 210, 210' gegebenenfalls als Teil des Kolbens 150 ausgeführt werden, indem beispielsweise in dem Kolben 150 ein entsprechender Belüftungskanal 150 vorgesehen wird, der mit der Pumpenkammer 130 in Kontakt steht.

Darüber hinaus können aber auch grundsätzlich andere Pumpenarten als die bisher beschriebenen Kolbenpumpen zum Einsatz kommen. So sind Ausführungsbeispiel der vorliegenden Erfindung grundsätzlich nicht auf diese beschränkt. Es können beispielsweise ebenfalls Drehschieberpumpen oder andere Pumpen als Basis für Ausführungsbeispiel der vorliegenden Erfindung herangezogen werden. Während im Falle einer Kolbenpumpe das bewegliche Bauteil 150 ein Kolben ist, wäre beispielsweise im Falle einer Drehschieberpumpe das bewegliche Bauteil ein Drehschieber, welcher in einen Rotor aufgenommen oder mit diesem verbunden ist. Grundsätzlich können aber auch andere Pumpentypen herangezogen werden.

Schmiermittelsysteme gemäß Ausführungsbeispielen der vorliegenden Erfindung sind ebenso wenig wie die bisher beschriebenen Pumpen auf das Fördern von Fetten als Medien beschränkt. So können vielmehr auch andere Schmierstoffe oder Schmiermittel im Zusammenhang mit Ausführungsbeispielen der vorliegenden Erfindung gefördert, entsorgt oder zugeführt werden. Neben den bisher beschriebenen Ölen und Fetten können auch Emulsionen oder schüttgutartiges Granulat oder Schmiermittel grundsätzlich mit Ausführungsbeispielen der vorliegenden Erfindung zusammen verwendet werden. Ein Beispiel stellen Kohlenstoff-haltige Schmiermittel, etwa auf Basis von Grafit dar.

Ausführungsbeispiele der vorliegenden Erfindung können darüber hinaus auch im Zusammenhang mit anderen Lagern als Pitchlagern zur Einstellung des Anstellwinkels der Rotorblätter einer Windkraftanlagen eingesetzt werden. So können sie auch im Zusammenhang mit Außen- oder Innenringen anderer Lagertypen zum Einsatz kommen, oder zusammen mit Zumessventilen, Adaptern oder anderen Komponenten integriert werden. Entsprechenden Einlassöffnungen 170 der Pumpen 100 können so direkt mit radial oder axial verlaufenden Bohrungen, Leitungen und Kanälen von Wälzlagern gekoppelt werden.

Ausführungsbeispiele der vorliegenden Erfindung können nicht nur zur Aufnahme von Altfett und anderen Schmierstoffen aus Lagern und zur Förderung zu Sammelbehältern verwendet werden, sondern können grundsätzlich im Zusammenhang mit anderen Medien eingesetzt werden, bei denen ein "druckfreier" Transport in das Innere der Pumpenkammer von Vorteil ist. Beispiele für Anwendungen stellen so Schmiermittelsysteme und entsprechende Pumpen von Windkraftanlagen, Gezeitenkraftanlagen, Turbinen, Baumaschinen und anderen größeren Maschinen dar, bei denen eine entsprechende Förderung von verbrauchtem Schmiermittel aus den zugehörigen Maschinenteilen oder -elementen "druckfrei" erfolgt. So können neben den bereits genannten Anlagen beispielsweise Bagger, Geräte zum Transport und zur Verarbeitung von Baustoffen, Hebefahrzeuge, Geräte im Verkehrswegebau, Geräte zum Kanal- oder Rohrleitungsbau, Verdichtungsgeräte, Tunnelbaugeräte, Kompressorgeräte oder Reinigungsgeräte auch mit Ausführungsbeispielen der vorliegenden Erfindung betrieben werden.

Nachfolgend werden zur Vereinfachung zusammenfassende Bezugszeichen verwendet.

### Bezugszeichenliste

- 100,: 100' Pumpe
- 110: Pumpenkörper
- 120: Bohrung
- 130: Pumpenkammer
- 140: Öffnung
- 150: Kolben
- 160: Pumpeneinlass
- 170: Einlassöffnung
- 180: Auslass
- 190: Auslassöffnung
- 200: Rückschlagventil
- 210, 210': Belüftungseinrichtung
- 220: Belüftungsöffnung
- 230: Kante der Belüftungsöffnung
- 240: Kante der Einlassöffnung
- 250: Linie
- 260: Verschluss
- 270: Dichtung
- 280: zweiter Pumpenkörper
- 290: Gewinde
- 300: Dichtung
- 310: Bohrung
- 320: Ausnehmung
- 330: Ring
- 340: Schulter
- 350: Druckfeder
- 360: Stirnfläche
- 370: Stirnfläche
- 380: weitere Bohrung
- 390: Verjüngung
- 400: Dichtung
- 410: Innengewinde
- 420: Anschlussstück
- 430: Stirnfläche
- 440: Hohlraum
- 450: erster Steueranschluss
- 460: zweiter Steueranschluss

- 500: Schmiermittelsystem
- 510: Einleitungspumpe
- 520: Hauptleitung
- 530: Verteiler
- 540: Verteilerleitung
- 550: Maschinenelement
- 560: Zahnkranz
- 570: Zwischenleitung
- 580: Altfettsammelleitung
- 590: Sammelbehälter

- 600: Belüftungsventil
- 610: äußere Belüftungsöffnung
- 620: Hohlraum
- 630: Kugel
- 640: angeschrägte Stirnfläche
- 650: Schulter

## Patentansprüche

1. Pumpe (100) zum Fördern eines Schmiermittels, mit folgenden Merkmalen:
einer Pumpenkammer (130) mit einer Einlassöffnung (170) und einer Auslassöffnung (190);
einem beweglichen Bauteil (150), das wenigstens teilweise in der Pumpenkammer (130) beweglich angeordnet und ausgebildet ist, um eine Menge des Schmiermittels, das sich in der Pumpenkammer (130) befindet, von der Einlassöffnung (170) zu der Auslassöffnung (190) zu fördern; und
einer Belüftungseinrichtung (210) mit einer von der Einlassöffnung (170) und der Auslassöffnung (190) verschiedenen Belüftungsöffnung (220) in der Pumpenkammer (130),
wobei die Belüftungseinrichtung (210) ausgebildet ist, um wenigstens zeitweise ein Bilden eines Unterdrucks in der Pumpenkammer (130) zu reduzieren oder im Wesentlichen zu unterbinden.

2. Pumpe (100) nach Anspruch 1, bei der die Belüftungseinrichtung (210) ausgebildet ist, um ein Gas oder ein Gasgemisch über die Belüftungsöffnung (220) in die Pumpenkammer (130) einzulassen.

3. Pumpe (100) nach einem der vorhergehenden Ansprüche, bei der die Belüftungseinrichtung (210) derart ausgebildet und angeordnet ist, dass das bewegliche Bauteil (150) die Belüftungsöffnung (220) und die Einlassöffnung (170) im Wesentlichen zeitgleich verschließt und freigibt.

4. Pumpe (100) nach einem der vorhergehenden Ansprüche, bei der die Belüftungseinrichtung (210) ein Belüftungsventil (600) umfasst und das ausgebildet ist, um sich bei Überschreiten einer vorbestimmten Druckdifferenz zwischen der Pumpenkammer (130) und eines Referenzdrucks zu öffnen.

5. Pumpe (100) nach einem der vorhergehenden Ansprüche, bei der die Pumpe (100) ausgebildet ist, sodass eine Bewegung des beweglichen Bauteils (150) von einer Grundstellung ausgehend zyklisch oder periodisch mit einer ersten und einer zweiten Bewegungsphase erfolgt, wobei die Pumpe (100) ausgebildet ist, um während der ersten Bewegungsphase die Menge des Mediums von der Einlassöffnung (170) zu der Auslassöffnung (190) zu fördern, wobei die Pumpe (100) weiter ausgebildet ist, um während der zweiten Bewegungsphase in die Grundstellung zurückzukehren, und wobei die Belüftungseinrichtung (210) ausgebildet ist, um während der zweiten Bewegungsphase das Bilden des Unterdrucks in der Pumpenkammer (130) zu reduzieren oder im Wesentlichen zu unterbinden.

6. Pumpe (100) nach einem der vorhergehenden Ansprüche, bei dem die Pumpe (100) eine Kolbenpumpe ist, bei der das bewegliche Bauteil (150) ein Kolben ist und bei der die Pumpenkammer (130) wenigstens einen zylinderförmigen Abschnitt aufweist, in den sich der Kolben (150) zumindest teilweise beweglich hinein erstreckt,
oder
bei dem die Pumpe (100) eine Drehschieberpumpe ist und bei dem das bewegliche Bauteil (150) ein Drehschieber ist.

7. Schmiermittelsystem (500) zum Abführen von einer Menge eines Schmiermittels von einem Maschinenelement (550), mit folgenden Merkmalen:
einer Pumpe (100) nach einem der Ansprüche 1 bis 6, bei der eine Schmiermittelabführung des Maschinenelements (550) mit der Einlassöffnung (170) der Pumpe (170) gekoppelt ist, um aus dem Maschinenelement (550) austretendes Schmiermittel als Medium zu fördern; und
einem Anschluss für einen Sammelbehälter (590), der mit der Auslassöffnung (190) der Pumpe (100) gekoppelt ist, um das von der Pumpe (100) geförderte Schmiermittel an einen anschließbaren Sammelbehälter (590) abzugeben,
wobei das Schmiermittelsystem (500) ausgebildet ist, um das aus dem Maschinenteil (550) ausgetretene Schmiermittel ohne einen Unterdruck in der Pumpenkammer (130) der Pumpe (100), beispielsweise durch eine Fliehkraft, eine Trägheitskraft, eine Diffusionskraft oder eine Schwerkraft, über die Einlassöffnung (170) in die Pumpenkammer (130) der Pumpe (100) aufzunehmen.

8. Schmiermittelsystem (500) nach Anspruch 7, bei dem das Maschinenelement (550) ein Lager einer Windkraftanlage, einer Gezeitenkraftanlage, einer Turbine oder einer Baumaschine ist.

9. Schmiermittelsystem (500) nach einem der Ansprüche 7 oder 8, das ferner eine Einleitungspumpe (510) aufweist, die mit dem Maschinenelement (550) gekoppelt ist, um das Schmiermittel zu einer Schmiermittelzuführung des Maschinenelements (550) zu fördern, wobei die Pumpe (100) eine Kolbenpumpe ist, bei der das bewegliche Bauteil (150) ein Kolben ist, bei dem der Kolben (150) mit der Einleitungspumpe (510) gekoppelt ist, sodass der Kolben (150) bei Beaufschlagen desselben mit einem Förderdruck der Einleitungspumpe (510) aus einer Grundstellung die Menge Schmiermittel aus der Pumpenkammer (130) durch die Auslassöffnung (190) fördert, und bei dem die Pumpe (100) ein Rückstellelement (350), insbesondere eine Feder oder Druckfeder, aufweist, das den Kolben (150) bei einem Rückgang des Förderdrucks in die Grundstellung bewegt.

10. Verfahren zum Fördern eines Schmiermittels, umfassend:
Aufnehmen einer Menge des Schmiermittels in einer Pumpenkammer (130) durch eine Einlassöffnung (170) der Pumpenkammer (130);
Fördern der Menge des Schmiermittels zu einer Auslassöffnung (190) der Pumpenkammer (130); und
wenigstens zeitweises Belüften der Pumpenkammer (130), um ein Bilden eines Unterdrucks in der Pumpenkammer (130) zu reduzieren oder im Wesentlichen zu unterbinden.

## Claims

1. Pump (100) for conveying a lubricant, having the following features:
- a pump chamber (130) having an inlet opening (170) and an outlet opening (190);
- a movable component (150) which is at least partially disposed in a movable manner in the pump chamber (130) and is configured for conveying an amount of the lubricant which is located in the pump chamber (130) from the inlet opening (170) to the outlet opening (190); and
- a ventilation installation (210) having in the pump chamber (130) a ventilation opening (220) which is different from the inlet opening (170) and from the outlet opening (190),
wherein the ventilation installation (210) is configured for at least at times reducing or substantially eliminating formation of negative pressure in the pump chamber (130).

2. Pump (100) according to Claim 1, in which the ventilation installation (210) is configured for admitting a gas or a gas mixture via the ventilation opening (220) into the pump chamber (130).

3. Pump (100) according to one of the preceding claims, in which the ventilation installation (210) is configured and disposed in such a manner that the movable component (150) closes and releases the ventilation opening (220) and the inlet opening (170) in a substantially simultaneous manner.

4. Pump (100) according to one of the preceding claims, in which the ventilation installation (210) comprises a ventilation valve (600) which is configured so as to open when a predetermined pressure differential between the pump chamber (130) and a reference pressure is exceeded.

5. Pump (100) according to one of the preceding claims, in which the pump (100) is configured such that a movement of the movable component (150), proceeding from an initial position, is performed in a cycled or periodic manner having a first and a second movement phase, wherein the pump (100) is configured so as to convey the amount of the medium from the inlet opening (170) to the outlet opening (190) during the first movement phase, wherein the pump (100) is furthermore configured so as to return to the initial position during the second movement phase, and wherein the ventilation installation (210) is configured so as to reduce or substantially eliminate formation of negative pressure in the pump chamber (130) during the second movement phase.

6. Pump (100) according to one of the preceding claims, in which the pump (100) is a piston pump in which the movable component (150) is a piston and in which the pump chamber (130) has at least one cylindrical portion into which the piston (150) at least partially extends in a movable manner,
or
in which the pump (100) is a rotary vane pump and in which the movable component (150) is a rotary vane.

7. Lubricant system (500) for leading away an amount of a lubricant from a machine element (550), having the following features:
- a pump (100) according to one of Claims 1 to 6, in which a lubricant lead-away of the machine element (550) is coupled to the inlet opening (170) of the pump (100), in order to convey as a medium lubricant which emerges from the machine element (550); and
- a connector for a collection container (590) which is coupled to the outlet opening (190) of the pump (100), in order to deliver the lubricant conveyed by the pump (100) to a connectable collection container (590);
wherein the lubricant system (500) is configured so as to receive without negative pressure in the pump chamber (130) of the pump (100), for example by way of a centrifugal force, an inertia force, a diffusion force, or gravity, the lubricant emerging from the machine part (550) via the inlet opening (170) into the pump chamber (130) of the pump (100).

8. Lubricant system (500) according to Claim 7, in which the machine element (550) is a bearing of a wind energy plant, of a tidal energy plant, of a turbine, or of a construction machine.

9. Lubricant system (500) according to one of Claims 7 and 8, further having an leading-in pump (510) which is coupled to the machine element (550), in order to convey the lubricant to a lubricant supply of the machine element (550), wherein the pump (100) is a piston pump in which the movable component (150) is a piston in which the piston (150) is coupled to the leading-in pump (510), such that the piston (150) when impinged by a conveying pressure of the leading-in pump (510) from an initial position conveys the amount of lubricant from the pump chamber (130) through the outlet opening (190), and in which the pump (100) has a restoring element (350), in particular a spring or a compression spring, which moves the piston (150) into the initial position when the conveying pressure recedes.

10. Method for conveying a lubricant, comprising:
- receiving an amount of the lubricant in a pump chamber (130) via an inlet opening (170) in the pump chamber (130);
- conveying the amount of the lubricant to an outlet opening (190) of the pump chamber (130); and
- at least at times ventilating the pump chamber (130), in order to reduce or substantially eliminate formation of negative pressure in the pump chamber (130).

## Revendications

1. Pompe (100) destinée au transport d'un lubrifiant, présentant les caractéristiques suivantes :
une chambre de pompe (130) présentant une ouverture d'entrée (170) et une ouverture de sortie (190) ;
un composant mobile (150) qui est disposé de manière mobile au moins partiellement dans la chambre de pompe (130) et est réalisé pour transporter une quantité du lubrifiant qui se trouve dans la chambre de pompe (130), à partir de l'ouverture d'entrée (170) jusqu"à l'ouverture de sortie (190) ; et
un dispositif de ventilation (210) présentant une ouverture de ventilation (220), différente de l'ouverture d'entrée (170) et de l'ouverture de sortie (190), dans la chambre de pompe (130),
le dispositif de ventilation (210) étant réalisé pour réduire ou essentiellement empêcher au moins temporairement une production d'une dépression dans la chambre de pompe (130).

2. Pompe (100) selon la revendication 1, dans laquelle le dispositif de ventilation (210) est réalisé pour admettre un gaz ou un mélange gazeux dans la chambre de pompe (130) par le biais de l'ouverture de ventilation (220).

3. Pompe (100) selon l'une quelconque des revendications précédentes, dans laquelle le dispositif de ventilation (210) est réalisé et disposé de telle sorte que le composant mobile (150) ferme et libère essentiellement simultanément l'ouverture de ventilation (220) et l'ouverture d'entrée (170).

4. Pompe (100) selon l'une quelconque des revendications précédentes, dans laquelle le dispositif de ventilation (210) comporte une soupape de ventilation (600) qui est réalisée pour s'ouvrir lorsqu'une différence de pression prédéfinie entre la chambre de pompe (130) et une pression de référence est dépassée.

5. Pompe (100) selon l'une quelconque des revendications précédentes, la pompe (100) étant réalisée de telle sorte qu'un déplacement du composant mobile (150) à partir d'une position de base s'effectue cycliquement ou périodiquement avec une première et une deuxième phase de déplacement, la pompe (100) étant réalisée pour transporter la quantité du milieu à partir de l'ouverture d'entrée (170) jusqu'à l'ouverture de sortie (190) pendant la première phase de déplacement, la pompe (100) étant en outre réalisée pour revenir à la position de base pendant la deuxième phase de déplacement, et le dispositif de ventilation (210) étant réalisé pour réduire ou essentiellement empêcher la production de la dépression dans la chambre de pompe (130) pendant la deuxième phase de déplacement.

6. Pompe (100) selon l'une quelconque des revendications précédentes, la pompe (100) étant une pompe à piston, dans laquelle le composant mobile (150) est un piston et dans laquelle la chambre de pompe (130) comprend au moins une portion cylindrique à l'intérieur de laquelle le piston (150) s'étend de manière au moins partiellement mobile,
ou
dans laquelle la pompe (100) est une pompe à tiroir rotatif et dans laquelle le composant mobile (150) est un tiroir rotatif.

7. Système de lubrification (500) pour évacuer une quantité de lubrifiant d'un élément de machine (550), présentant les caractéristiques suivantes :
une pompe (100) selon l'une quelconque des revendications 1 à 6, dans laquelle une évacuation de lubrifiant de l'élément de machine (550) est accouplée à l'ouverture d'entrée (170) de la pompe (100), pour transporter, en tant que milieu, du lubrifiant sortant de l'élément de machine (550) ; et
un raccord pour un récipient collecteur (590), qui est accouplé à l'ouverture de sortie (190) de la pompe (100), pour fournir le lubrifiant transporté par la pompe (100) à un récipient collecteur (590) pouvant être raccordé,
le système de lubrification (500) étant réalisé pour recevoir, par le biais de l'ouverture d'entrée (170) dans la chambre de pompe (130) de la pompe (100), le lubrifiant sorti de la partie de machine (550) sans dépression dans la chambre de pompe (130) de la pompe (100), par exemple au moyen d'une force centrifuge, d'une force d'inertie, d'une force de diffusion ou d'une force de pesanteur.

8. Système de lubrification (500) selon la revendication 7, dans lequel l'élément de machine (550) est un palier d'une éolienne, d'une centrale marémotrice, d'une turbine ou d'un engin de chantier.

9. Système de lubrification (500) selon l'une quelconque des revendications 7 ou 8, lequel comprend en outre une pompe d'alimentation (510) qui est accouplée à l'élément de machine (550), pour transporter le lubrifiant jusqu'à une alimentation de lubrifiant de l'élément de machine (550), la pompe (100) étant une pompe à piston, dans laquelle le composant mobile (150) est un piston, dans lequel le piston (150) est accouplé à la pompe d'alimentation (510), de telle sorte que, lors de sa sollicitation, le piston (150) transporte à une pression de refoulement de la pompe d'alimentation (510), à partir d'une position de base, la quantité de lubrifiant provenant de la chambre de pompe (130) à travers l'ouverture de sortie (190), et dans lequel la pompe (100) comprend un élément de rappel (350), en particulier un ressort ou un ressort de compression, lequel élément de rappel déplace le piston (150) jusqu'à la position de base lors d'une diminution de la pression de refoulement.

10. Procédé destiné au transport d'un lubrifiant, comportant :
la réception d'une quantité du lubrifiant dans une chambre de pompe (130) à travers une ouverture d'entrée (170) de la chambre de pompe (130) ;
le transport de la quantité du lubrifiant jusqu'à une ouverture de sortie (190) de la chambre de pompe (130) ; et
la ventilation au moins temporaire de la chambre de pompe (130), pour réduire ou essentiellement empêcher une production d'une dépression dans la chambre de pompe (130).
